# EUROPEAN PATENT APPLICATION

(11) **EP 2 937 256 A1**
(43) Date of publication of application: **28.10.2015**
(21) Application number: 12890315.0
(22) Date of filing: 20.12.2012
(51) Int. Cl.: B60W 50/14, B60K 35/00, B60K 37/02

(54) **METHOD FOR CONTROLLING VEHICLE-INFORMATION DISPLAYING BY MEANS OF ECU AND APPARATUS THEREFOR**

(71) Applicant: Volvo Construction Equipment AB, 631 85 Eskilstuna (SE)
(72) Inventor: LEE, Myung-Hoon, Changwon-si Gyeongsangnam-do 642-370 (KR); KIM, Young-Don, Changwon-si Gyeongsangnam-do 642-370 (KR)
(74) Representative: Stöckeler, Ferdinand
(86) International application number: PCT/KR2012/011175
(87) International publication number: WO 2014/098283

(57) **Abstract**

The present invention relates to a method for controlling vehicle-information displaying by means of an ECU and an apparatus therefor, the method comprising the steps of: causing an ECU to collect the vehicle information displayed by the ECU in an instrument cluster; extracting the data of graphic attributes from the collected vehicle-information according to various pieces of vehicle information; sequentially arranging the extracted data of the graphic attributes according to the predetermined transmission order of a drawing communication protocol dedicated for displaying vehicle information; and streaming the sequentially arranged data of the graphic attributes to the instrument cluster. Thus, the present invention can control displaying in instrument clusters of different display specifications by using the ECU for supporting the drawing communication protocol.

## Description

### TECHNICAL FIELD

The present invention relates to a method and an apparatus for controlling display of vehicle information using an electronic control unit (ECU). More particularly, the present invention relates to such a method and apparatus for controlling display of vehicle information of an ECU, which can control the screen display of instrument clusters having different display specifications using the ECU that supports a drawing communication protocol, i.e., a communication protocol dedicated for displaying vehicle information.

### BACKGROUND OF THE INVENTION

A general method for controlling display of vehicle information using an ECU is performed such that when the ECU transmits parameter information of vehicle information and graphic attribute data of relevant vehicle information to an instrument cluster, the instrument cluster displays an image or a text corresponding to the relevant vehicle information on a display screen thereof based on the transmitted parameter information and graphic attribute data of the vehicle information.

However, such a conventional vehicle information display control method requires an instrument cluster to be developed separately for each equipment due to a difference in both the graphic attribute data and the transmission order of the graphic attribute data between respective ECUs and also requires each of the instrument clusters to include a complex screen transition algorithm for screen display.

In other words, each of the instrument clusters is required to include a complex screen transition algorithm for converting graphic attribute data or the like transmitted thereto from each ECU in conformance with its own display specification due to a difference in both the graphic attribute data transmitted thereto and the transmission order of the graphic attribute data between the respective ECUs.

This contributes to the development of a separate instrument cluster for different equipment, and the development and management of the instrument cluster acts as a burden on an original equipment manufacturer (OEM) side.

In addition, in the case where the display specification is additionally provided, there is caused a problem in that software needs to be updated for each instrument cluster.

### SUMMARY OF THE INVENTION

Accordingly, the present invention has been made to solve the aforementioned problems occurring in the prior art, and it is an object of the present invention to provide a method and apparatus for controlling display of vehicle information of an ECU, which can control the screen display of instrument clusters having different display specifications using the ECU that supports a drawing communication protocol, i.e., a communication protocol dedicated for displaying vehicle information in order to reduce an inconvenience having to develop a separate instrument cluster for each equipment due to a difference in both the graphic attribute data and the transmission order of the graphic attribute data between respective ECUs as well as perform the efficient update of the graphic attribute data.

### TECHNICAL SOLUTION

To achieve the above object, in accordance with an embodiment of the present invention, there is provided a method for controlling display of vehicle information of an ECU to display the vehicle information on an instrument cluster, the method including the steps of:
initiating a vehicle information screen display operating mode when the ECU senses an input of a setting initiation command;
collecting the vehicle information that is to be displayed on the instrument cluster depending on the initiation of the operating mode;
extracting graphic attribute data of the collected vehicle information for the respective vehicle information;
sequentially arranging the extracted graphic attribute data according to the transmission order of a preset communication protocol dedicated for displaying vehicle information;
streaming the sequentially arranged graphic attribute data to the instrument cluster; and
terminating the vehicle information screen display operating mode by stopping the streaming operation when the ECU senses a setting termination command.

Preferably, the setting initiation command may be generated when a start key is turned on, and the setting termination command may be generated when the start key is turned off.

To achieve the above object, in accordance with another embodiment of the present invention, there is provided an apparatus for controlling display of vehicle information of an ECU to display the vehicle information on an instrument cluster, the apparatus including:
a vehicle information collection unit for collecting the vehicle information that is to be displayed on the instrument cluster; and
a first control unit sequentially streaming the graphic attribute data of the vehicle information collected by the vehicle information collection unit to the instrument cluster according to the transmission order of a preset communication protocol dedicated for displaying vehicle information.

Preferably, the first control unit includes:
an extraction module for extracting graphic attribute data of the vehicle information collected by the vehicle information collection unit for the respective vehicle information;
an arrangement module for sequentially arranging the graphic attribute data extracted by the extraction module according to the transmission order of the preset communication protocol dedicated for displaying vehicle information; and
a streaming module for streaming the graphic attribute data sequentially arranged by the arrangement module to the instrument cluster.

In addition, the apparatus may further include a second control unit for starting the collection operation of the vehicle information collection unit when a start key is turned on and stopping the streaming operation of the first control unit when the start key is turned off.

### ADVANTAGEOUS EFFECT

The method and apparatus for controlling display of vehicle information of an ECU in accordance with the present invention as constructed above has the following advantages.

The method and apparatus of the present invention can control the screen display of instrument clusters having different display specifications using the ECU that supports the drawing communication protocol, i.e., a communication protocol dedicated for displaying vehicle information.

Furthermore, it is possible to reduce an inconvenience having to develop a separate instrument cluster for each equipment due to a difference in both the graphic attribute data and the transmission order of the graphic attribute data between respective ECUs. Besides, a burden for the new development of the instrument cluster, and the time spent to develop the instrument cluster can be reduced.

Moreover, software for a relevant instrument cluster needs not to be corrected separately although the screen display specifications are changed.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram showing the configuration of an apparatus for controlling display of vehicle information of an ECU in accordance with the present invention;
Fig. 2 is a flowchart sequentially showing the operation of an apparatus for controlling display of vehicle information of an ECU in accordance with the present invention;
Fig. 3 is a table showing an example of graphic attribute data of vehicle information in accordance with the present invention; and
Fig. 4 is a diagrammatic view showing a user interface (IU) for vehicle information displayed on an instrument cluster in accordance with the present invention.

### * Explanation on reference numerals of main elements in the drawings *

110: vehicle information collection unit
120: first control unit
130: second control unit
121: extraction module
122: arrangement module
123: streaming module

### DETAILED DESCRIPTION OF THE INVENTION

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and through the specification, like elements are designated by like reference numerals.

In the specification and the claims, when a portion includes an element, it is meant to include other elements, but not exclude the other elements unless otherwise specifically stated herein.

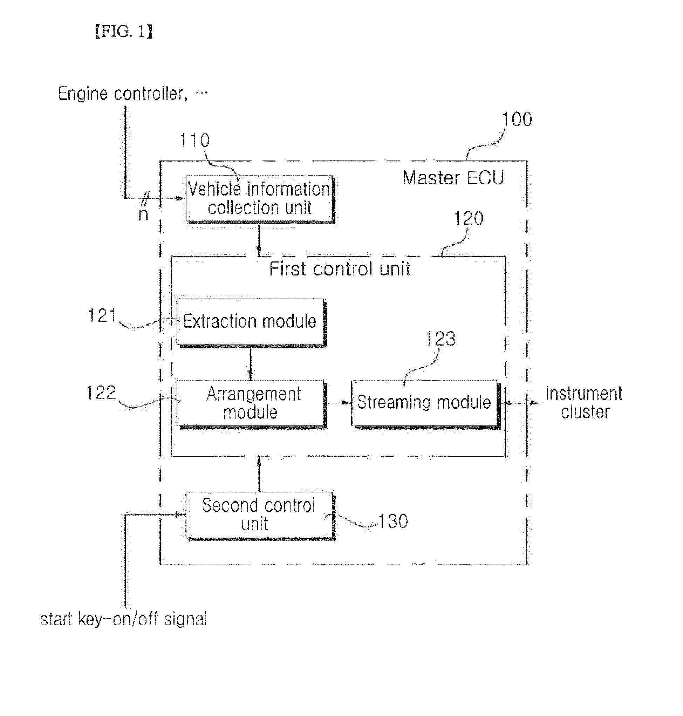

Fig. 1 is a block diagram showing the configuration of an apparatus for controlling display of vehicle information of an ECU in accordance with the present invention.

As shown in Fig. 1, the apparatus of the prevent invention is a vehicle information display control apparatus built in an ECU that controls vehicle information to be displayed on an instrument cluster, and is configured to largely include a vehicle information collection unit 110 and a first control unit 120.

In other words, the apparatus of the prevent invention includes: a vehicle information collection unit 110 for collecting the vehicle information that is to be displayed on the instrument cluster; and a first control unit 120 sequentially streaming graphic attribute data of the vehicle information collected by the vehicle information collection unit 110 to the instrument cluster according to the transmission order of a preset drawing communication protocol, i.e., a communication protocol dedicated for displaying vehicle information.

Additionally, the apparatus of the prevent invention further includes a second control unit 130 for starting the collection operation of the vehicle information collection unit when a start key is turned on and stopping the streaming operation of the first control unit when the start key is turned off.

Herein, the vehicle information collection unit 110 collects, for example, various items of vehicle information inputted thereto from a controller (e.g., an engine controller if the vehicle information is engine RPM information) that controls the state of relevant vehicle information. The collection operation of the vehicle information collection unit 110 can be started under the control of the second control unit 130 when a signal for turning on a start key, i.e., a start key-on signal is applied to the second control unit 130. That is, when a control signal generated from the second control unit 130 upon the detection of the start key-on signal is applied to the vehicle information collection unit 110, the vehicle information collection operation is started so that consumption of power can be reduced. The vehicle information may include engine RPM information, HVAC (Heating Ventilation Air Conditioning) information(e.g., air-blowing intensity information, air-blowing direction information, air-blowing temperature information, defrost on/off information, internal air/external air information, AC on/off information, etc.). In addition, the thus collected vehicle information is inputted to the first control unit 120 so that it can be used to extract graphic attribute data which is to be transmitted to the instrument cluster.

The first control unit 120 sequentially streams the graphic attribute data of the vehicle information collected by the vehicle information collection unit 110 to the instrument cluster together with parameter information of relevant vehicle information according to the transmission order specified in a preset drawing communication protocol dedicated for displaying vehicle information. In other words, the first control unit 120 extracts the graphic attribute data of the vehicle information collected by the vehicle information collection unit 110 for the respective vehicle information, sequentially arranges the extracted graphic attribute data according to the transmission order (e.g., engine RPM information is transmitted in a first order, HVAC mode information is transmitted in a second order, etc.) of the preset drawing communication protocol dedicated for displaying vehicle information, and then streams the sequentially arranged graphic attribute data to the instrument cluster together with the parameter information of relevant vehicle information. Resultantly, the instrument cluster can display the graphic attribute data of the vehicle information streamed by the first control unit 120 on a display screen thereof according to the transmission order of the drawing communication protocol dedicated for displaying vehicle information without a separate information conversion operation as in the prior art. The streaming operation of the first control unit 120 can stopped under the control of the second control unit 130 when a signal for turning off a start key, i.e., a start key-off signal is applied to the second control unit 130. That is, when a control signal generated from the second control unit 130 upon the detection of the start key-off signal is applied to the first control unit 120, the first control unit 120 stops the streaming operation so that the vehicle information screen display operating mode in accordance with the present invention can be terminated. More specifically, the first control unit 120 includes an extraction module 121 for extracting graphic attribute data of the vehicle information collected by the vehicle information collection unit 110 for the respective vehicle information; an arrangement module 122 for sequentially arranging the graphic attribute data extracted by the extraction module 121 according to the transmission order of the preset communication protocol dedicated for displaying vehicle information; and a streaming module 123 for streaming the graphic attribute data sequentially arranged by the arrangement module 122 to the instrument cluster. Meanwhile, the graphic attribute data is matched and stored for the respective relevant vehicle information. The graphic attribute data may include color information, line information (e.g., information of coordinate and thickness of the line, rectangular information (e.g., information on coordinate, thickness and angle (e.g., clockwise direction) of the rectangle), square information (e.g., information on coordinate, thickness and angle (e.g., clockwise direction) of the square), polygonal information (e.g., information on coordinate, thickness and angle (e.g., clockwise direction) of the polygon), circular/elliptical information (e.g., information on coordinate, thickness, diameter and angle (e.g., clockwise direction) of the circle/ellipse), triangular information (e.g., information on coordinate, thickness and angle (e.g., clockwise direction) of the triangle), brightness information (e.g., 0-100%, step: 1%), letter/symbol information (e.g., information on coordinate, size, angle, font, font position and index of the letter/symbol), image information (e.g., information on coordinate, angle and number of the image), and sound (buzzer) information (e.g., information on on/off time and frequency). For reference, the color information is composed of RGB color information. The color information includes color information of line/rectangle/square/polygon/circle/ellipse/triangle.

The second control unit 130 starts the collection operation of the vehicle information collection unit 110 when a start key is turned on and stops the streaming operation of the first control unit 120 when the start key is turned off. In other words, when the start key-on signal is applied to the second control unit 130, the second control unit 130 generates a first control signal for application to the vehicle information collection unit 110 so that the vehicle information collection unit 110 performs the start of the collection operation of the vehicle information in response to the first control signal applied thereto. On the other hand, when the start key-off signal is applied to the second control unit 130, the second control unit 130 generates a second control signal for application to the first control unit 120 so that the first control unit 120 performs the stoppage of the streaming operation of the vehicle information in response to the second control signal applied thereto. Thus, the power consumption of a battery or the like can be reduced.

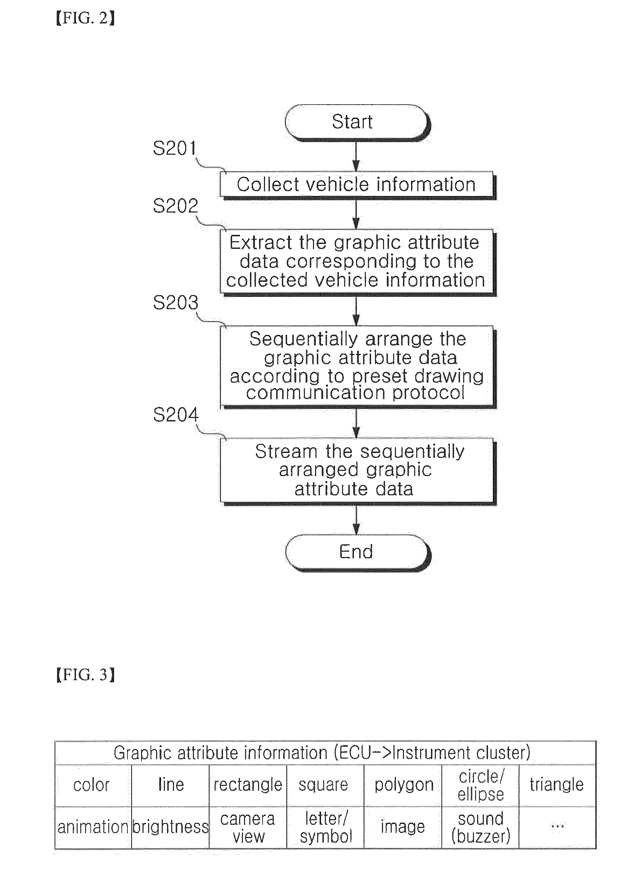

Fig. 2 is a flowchart sequentially showing the operation of an apparatus for controlling display of vehicle information of an ECU in accordance with the present invention.

Hereinafter, the operation of an apparatus for controlling display of vehicle information of an ECU in accordance with the present invention will be described with reference to Fig. 2.

As shown in Fig. 2, first, the vehicle information collection unit collects various items of vehicle information (e.g., engine RPM information, HVAC information, etc.) which is to be displayed on the instrument cluster (S201).

For example, the vehicle information collection unit collects, for example, various items of vehicle information inputted thereto from a controller (e.g., an engine controller if the vehicle information is engine RPM information) that controls the state of relevant vehicle information.

The collection operation of the vehicle information collection unit can be started under the control of the second control unit when the start key-on signal is applied to the second control unit.

That is, when a control signal generated from the second control unit 130 upon the detection of the start key-on signal is applied to the vehicle information collection unit 110, the vehicle information collection operation is started so that consumption of power can be reduced.

The vehicle information may include engine RPM information, HVAC (Heating Ventilation Air Conditioning) information.

In addition, the HVAC information may be composed of air-blowing intensity information, air-blowing direction information, air-blowing temperature information, defrost on/off information, internal air/external air information, AC on/off information, etc.

Meanwhile, the thus collected vehicle information is inputted to the first control unit 120 so that it can be used to extract graphic attribute data which is to be transmitted to the instrument cluster.

Thereafter, the first control unit sequentially streams the graphic attribute data of the vehicle information collected by the vehicle information collection unit 110 to the instrument cluster together with parameter information of relevant vehicle information according to the transmission order specified in a preset drawing communication protocol dedicated for displaying vehicle information.

More specifically, first, the first control unit extracts the graphic attribute data of the vehicle information collected by the vehicle information collection unit 110 for the respective vehicle information (S202).

Subsequently, the first control unit sequentially arranges the extracted graphic attribute data according to the transmission order of the preset drawing communication protocol dedicated for displaying vehicle information (S203).

In this case, the transmission order is set as specified in the preset drawing communication protocol.

For example, the transmission order can be set such that engine RPM information of the vehicle information is transmitted in a first order and HVAC mode information is transmitted in a second order.

Then, the first control unit streams the sequentially arranged graphic attribute data to the instrument cluster together with the parameter information of relevant vehicle information after the extracted graphic attribute data is sequentially arranged according to the transmission order of the preset drawing communication protocol dedicated for displaying vehicle information (S204).

Resultantly, the instrument cluster can display the graphic attribute data of the vehicle information streamed by the first control unit on a display screen thereof according to the transmission order of the preset drawing communication protocol dedicated for displaying vehicle information without a separate information conversion operation as in the prior art.

In the meantime, the streaming operation of the first control unit can stopped under the control of the second control unit 130 when the start key-off signal is applied to the second control unit.

That is, when a control signal generated from the second control unit upon the detection of the start key-off signal is applied to the first control unit, the first control unit stops the streaming operation so that the vehicle information screen display operating mode in accordance with the present invention can be terminated.

By doing so, the power consumption of a battery or the like can be reduced.

As described above, the method and apparatus of the present invention can control the screen display of instrument clusters having different display specifications using the ECU that supports the drawing communication protocol dedicated for displaying vehicle information, so that it is possible to reduce an inconvenience having to develop a separate instrument cluster for each equipment due to a difference in both the graphic attribute data and the transmission order of the graphic attribute data between respective ECUs, and software for a relevant instrument cluster needs not to be corrected separately although the screen display specifications are changed.

Fig. 3 is a table showing an example of graphic attribute data of vehicle information in accordance with the present invention.

As shown in Fig. 3, the graphic attribute data in accordance with the present invention is matched and stored for the respective relevant vehicle information. That is, the graphic attribute data is set for the respective relevant vehicle information and is modified depending on the parameter information set by a worker.

Specifically, the graphic attribute data may include color information, line information (e.g., information of coordinate and thickness of the line, rectangular information (e.g., information on coordinate, thickness and angle (e.g., clockwise direction) of the rectangle), square information (e.g., information on coordinate, thickness and angle (e.g., clockwise direction) of the square), polygonal information (e.g., information on coordinate, thickness and angle (e.g., clockwise direction) of the polygon), circular/elliptical information (e.g., information on coordinate, thickness, diameter and angle (e.g., clockwise direction) of the circle/ellipse), triangular information (e.g., information on coordinate, thickness and angle (e.g., clockwise direction) of the triangle), brightness information (e.g., 0-100%, step: 1%), letter/symbol information (e.g., information on coordinate, size, angle, font, font position and index of the letter/symbol), image information (e.g., information on coordinate, angle and number of the image), and sound (buzzer) information (e.g., information on on/off time and frequency).

For reference, the color information is composed of RGB color information. The color information includes color information of line/rectangle/square/polygon/ circle/ellipse/triangle.

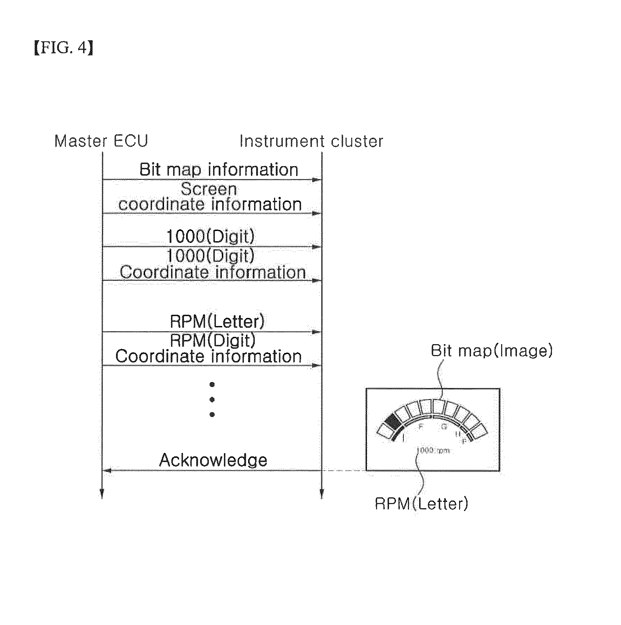

Fig. 4 is a diagrammatic view showing a user interface (IU) for, for example, engine RPM information of vehicle information displayed on an instrument cluster in accordance with the present invention.

As shown in Fig. 4, the engine RPM information displayed on the instrument cluster requires graphic attribute data in order for engine RPM information to be displayed on a display screen of the instrument cluster.

The graphic attribute data of the engine RPM information is provided to the instrument cluster from the ECU for a vehicle in accordance with the present invention.

That is, the ECU provides the graphic attribute data to the instrument cluster together with relevant parameter information by streaming the graphic attribute data to the instrument cluster using the preset drawing communication protocol dedicated for displaying vehicle information.

The graphic attribute data of the engine RPM information includes bit map information (i.e., bit map information corresponding to the current state of the engine RPM) used for displaying the current state of an engine RPM in the form of an image and bit map coordinate information of a relevant image.

In addition, the graphic attribute data includes digit information (e.g., "1000") used for displaying the engine RPM information in the form of digits and screen coordinate information used for displaying the digit information.

Further, the graphic attribute data includes text information used for indicating that the engine RPM information is rpm and screen coordinate information used for displaying the text information.

These items of information correspond to an example of the graphic attribute data necessary to display the engine RPM information on the display screen of the instrument cluster, and may include various attribute data as listed in Fig. 3 besides the above items of information.

In the present invention, the graphic attribute data of the vehicle information can be displayed as it is on the display screen of the instrument cluster according to the transmission order of the preset drawing communication protocol dedicated for displaying vehicle information without a separate information conversion operation as in the prior art.

As a result, it is possible to reduce an inconvenience having to develop a separate instrument cluster for each equipment due to a difference in both the graphic attribute data and the transmission order of the graphic attribute data between respective ECUs, and the efficient update of software for the graphic attribute data can be performed.

### INDUSTRIAL APPLICABILITY

The method and apparatus for controlling display of vehicle information of an ECU in accordance with the present invention as constructed above can control the screen display of instrument clusters having different display specifications using the ECU that supports the drawing communication protocol, i.e., a communication protocol dedicated for displaying vehicle information.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A method for controlling display of vehicle information of an ECU to display the vehicle information on an instrument cluster, the method comprising:
initiating a vehicle information screen display operating mode when the ECU senses an input of a setting initiation command;
collecting the vehicle information that is to be displayed on the instrument cluster depending on the initiation of the operating mode;
extracting graphic attribute data of the collected vehicle information for the respective vehicle information;
sequentially arranging the extracted graphic attribute data according to the transmission order of a preset communication protocol dedicated for displaying vehicle information;
streaming the sequentially arranged graphic attribute data to the instrument cluster; and
terminating the vehicle information screen display operating mode by stopping the streaming operation when the ECU senses a setting termination command.

2. The method according to claim 1, wherein the setting initiation command is generated when a start key is turned on, and the setting termination command is generated when the start key is turned off.

3. An apparatus for controlling display of vehicle information of an ECU to display the vehicle information on an instrument cluster, the apparatus comprising:
a vehicle information collection unit for collecting the vehicle information that is to be displayed on the instrument cluster; and
a first control unit sequentially streaming the graphic attribute data of the vehicle information collected by the vehicle information collection unit to the instrument cluster according to the transmission order of a preset communication protocol dedicated for displaying vehicle information.

4. The apparatus according to claim 3, wherein the first control unit comprises:
an extraction module for extracting graphic attribute data of the vehicle information collected by the vehicle information collection unit for the respective vehicle information;
an arrangement module for sequentially arranging the graphic attribute data extracted by the extraction module according to the transmission order of the preset communication protocol dedicated for displaying vehicle information; and
a streaming module for streaming the graphic attribute data sequentially arranged by the arrangement module to the instrument cluster.

5. The apparatus according to claim 4, further comprising a second control unit for starting the collection operation of the vehicle information collection unit when a start key is turned on and stopping the streaming operation of the first control unit when the start key is turned off.
